# EUROPEAN PATENT SPECIFICATION

(11) **EP 4 092 506 B1**
(45) Date of publication and mention of the grant of the patent: **13.09.2023**
(21) Application number: 22165003.9
(22) Date of filing: 29.03.2022
(51) Int. Cl.: G06F 1/16

(54) **ELECTRONIC DEVICE WITH CAMERA ANTI-PEEPING STRUCTURE**
ELEKTRONISCHE VORRICHTUNG MIT EINER KAMERASPÄHSCHUTZSTRUKTUR
DISPOSITIF ÉLECTRONIQUE AVEC STRUCTURE ANTI-OBSERVATION DE CAMÉRA

(30) Priority: 18.05.2021 TW 110117950
(43) Date of publication of application: 23.11.2022
(73) Proprietor: Pegatron Corporation, Taipei City 112 (TW)
(72) Inventor: LIN, Chuan-Yuan, 112 Taipei City (TW); WANG, Hui-Chen, 112 Taipei City (TW); HSIEH, I-Tien, 112 Taipei City (TW); WU, Hung-Yun, 112 Taipei City (TW)
(74) Representative: Viering, Jentschura & Partner mbB Patent- und Rechtsanwälte

(56) References cited:
- WO-A1-2019/156683
- CN-A- 111 581 680

## Description

### BACKGROUND

### TECHNICAL FIELD

The present disclosure relates to an electronic device, in particular to an electronic device with a camera anti-peeping structure.

### BACKGROUND

In order to prevent hackers from peeping through the cameras disposed on the electronic devices such as notebook computers or mobile devices, a variety of anti-peeping structures that can be additionally assembled in front of the cameras of the electronic devices or disposed on the main bodies of the notebook computers have been developed. Some of the camera anti-peeping structures are actuated by being fixed to the back of the main bodies and manually pushed by the users to open and close, and the anti-peeping pieces for blocking are directly exposed outside the screen.

However, since the existing anti-peeping structure needs to be actuated by sliding, the size and sliding stroke of the anti-peeping piece need to be taken into account for the sliding space required inside, so a lot of internal space will be occupied, which will increase the design difficulty for electronic devices with limited space. Additionally, the anti-peeping structure needs to be fixed to the main body from the inside, so the area with the anti-peeping structure will have the problem of obvious wide bezel in appearance. Furthermore, it is difficult for the traditional anti-peeping piece to be waterproof. Since the camera and the screen structure are independent, in the waterproof structure design, it is necessary to make the waterproof structure separately for the periphery of the screen and the periphery of the camera at the same time. With the trend to make things smaller and functions diversified in the market, the difficulty of designing and manufacturing will be greatly increased if the whole device is small in size and has a high level of waterproof/dustproof (IP67 or above) and anti-peeping functions at the same time.

CN 111 581 680 A and WO 2019/156683 A1 disclose anti-peeping structures for portable electronic devices.

### SUMMARY

In view of the above, an embodiment of the present disclosure provides an electronic device with a camera anti-peeping structure, including a main body, a camera and an anti-peeping structure. The camera is disposed in the main body. The anti-peeping structure is disposed at a side of the camera and includes a mounting member, a sliding member and an anti-peeping piece. The mounting member is disposed on the main body and includes a groove. The sliding member is slidably disposed in the groove and movable between a first position and a second position. The sliding member includes a first magnet. The anti-peeping piece has a first end and a second end opposite to each other and includes a second magnet disposed at the first end. The first end is pivotally connected to the mounting member. The second end is pivotable based on the first end as an axis to cover or expose the camera. When the sliding member moves to the first position, the first magnet attracts the second magnet such that the second end of the anti-peeping piece pivots toward the sliding member to expose the camera. When the sliding member moves to the second position, the first magnet repels the second magnet such that the second end of the anti-peeping piece pivots away from the sliding member to cover the camera.

Based on the above, by disposing the anti-peeping piece actuated by rotation, the electronic device with a camera anti-peeping structure according to this embodiment of the present disclosure can effectively reduce the movement space required for the anti-peeping piece to move to cover the camera.

The invention is defined by appended claim 1. Further embodiments are defined by the dependent claims.

### BRIEF DESCRIPTION OF THE DRAWINGS

FIG. 1 is a schematic view of an electronic device with a camera anti-peeping structure according to a first embodiment of the present disclosure;
FIG. 2 is a schematic three-dimensional view of the camera anti-peeping structure according to the first embodiment of the present disclosure;
FIG. 3 is a schematic exploded view of the camera anti-peeping structure according to the first embodiment of the present disclosure;
FIG. 4 is a schematic exploded view of the camera anti-peeping structure from another viewing angle according to the first embodiment of the present disclosure;
FIG. 5 is a schematic view of the camera anti-peeping structure in a first position according to the first embodiment of the present disclosure;
FIG. 6 is a schematic view of the camera anti-peeping structure in a second position according to the first embodiment of the present disclosure;
FIG. 7 is a schematic view showing distribution of magnetic poles of a first magnet and a second magnet according to the first embodiment of the present disclosure;
FIG. 8 is a schematic partial cross-sectional view of the camera anti-peeping structure taken along line A-A' in FIG. 1 according to the first embodiment of the present disclosure; and
FIG. 9 is a schematic view showing distribution of magnetic poles of a first magnet and a second magnet according to a second embodiment of the present disclosure.

### DETAILED DESCRIPTION

Various embodiments are described below in detail. However, the embodiments are merely used as examples for description and are not intended to narrow the protection scope of the present disclosure. In addition, some elements are omitted in the drawings in the embodiments to clearly show the technical features of the present disclosure. The same reference numerals are used to indicate the same or similar elements in all of the drawings.

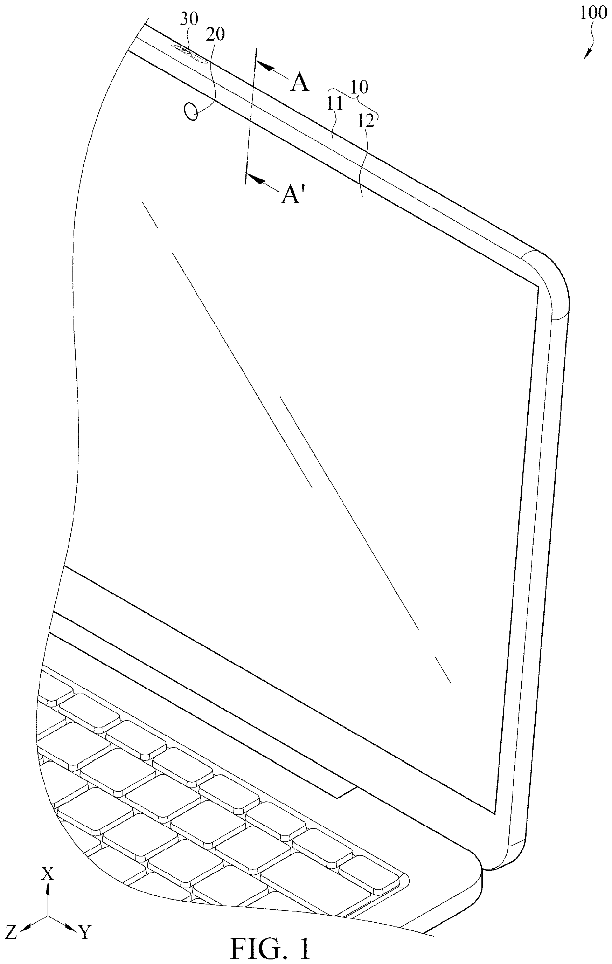

FIG. 1 is a schematic view of an electronic device with a camera anti-peeping structure according to a first embodiment of the present disclosure. FIG. 1 shows an example of an electronic device 100 with a camera anti-peeping structure in this implementation. The electronic device 100 is a notebook computer as shown in FIG. 1, but is not limited thereto. The electronic device 100 may also be various mobile devices with cameras, such as smart phones, tablet computers and the like.

In this embodiment, the electronic device 100 includes a main body 10, a camera 20 and an anti-peeping structure 30. The main body 10 includes a case 11 and a display panel 12. The display panel 12 is assembled and exposed on the case 11. In this embodiment, the display panel 12 is roughly distributed on a side surface of the case 11. The camera 20 is disposed in the main body 10, and the camera 20 is made visible through the display panel 12. As can be seen from FIG. 1, the camera 20 is located below the display panel 12, and a position on the display panel 12 corresponding to the camera 20 is provided with a transparent layer, so that the camera 20 is exposed on the display panel 12 for shooting conveniently. In other implementations, the display panel 12 may be hollowed in the position corresponding to the camera 20, so that the camera 20 is directly exposed and visible from outside the display panel 12. The anti-peeping structure 30 is disposed at a side of the camera 20. In this embodiment, the anti-peeping structure is disposed on an upper side of the electronic device 100 and located above the camera 20.

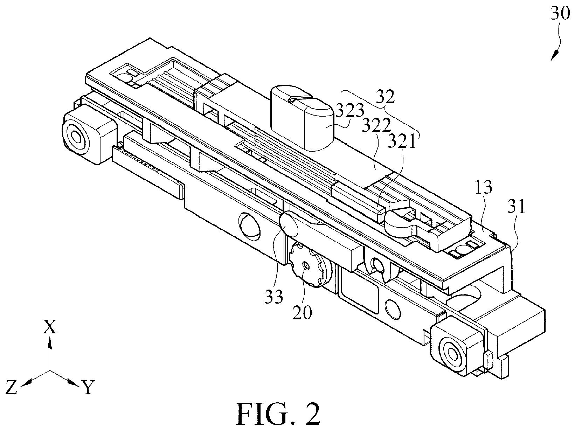

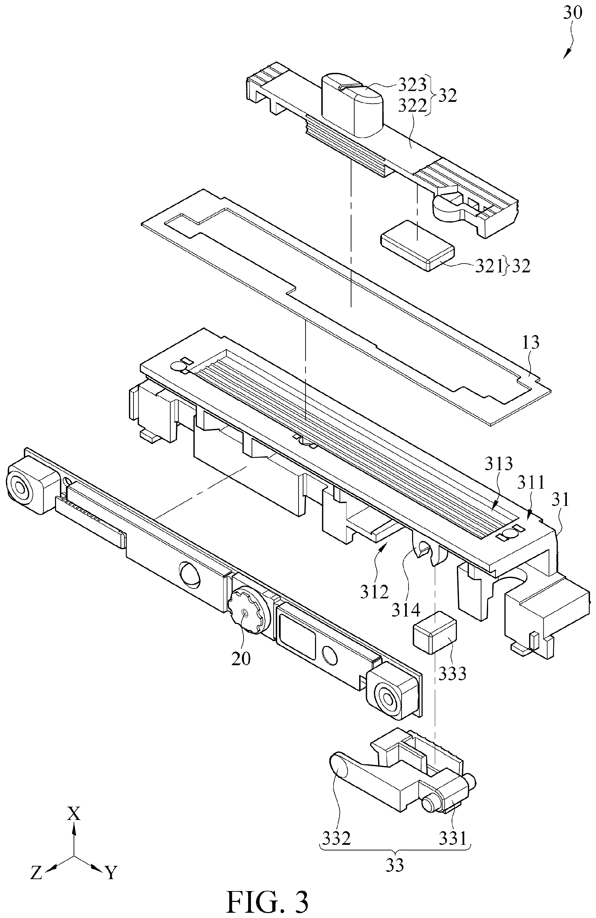

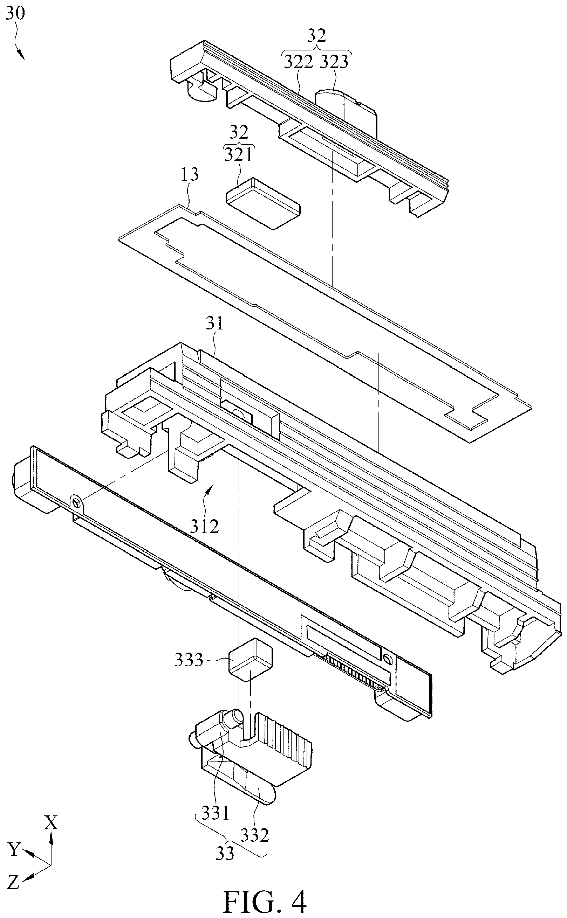

FIG. 2 is a schematic three-dimensional view of the camera anti-peeping structure according to the first embodiment of the present disclosure. FIG. 3 is a schematic exploded view of the camera anti-peeping structure according to the first embodiment of the present disclosure. FIG. 4 is a schematic exploded view of the camera anti-peeping structure from another viewing angle according to the first embodiment of the present disclosure. As can be seen from FIG. 2 to FIG. 4, the anti-peeping structure 30 includes a mounting member 31, a sliding member 32 and an anti-peeping piece 33. The mounting member 31 is arranged on the case 11 of the main body 10. The mounting member 31 has a first surface 311 and a second surface 312 opposite to each other and includes a groove 313 disposed on the first surface 311. In this embodiment, the mounting member 31 and the case 11 are mutually independent components, but in other implementations, the mounting member 31 may be integrally formed on the case 11 or directly formed on a support structure of the display panel 12. By using the independent mounting member 31, the sliding member 32 and the anti-peeping piece 33 may be firstly assembled on the mounting member 31, so that the anti-peeping structure 30 becomes a modular component, and then the anti-peeping structure is assembled into the case 11. By making the anti-peeping structure 30 modular, the production and manufacturing speed can be improved or the assembly process can be optimized.

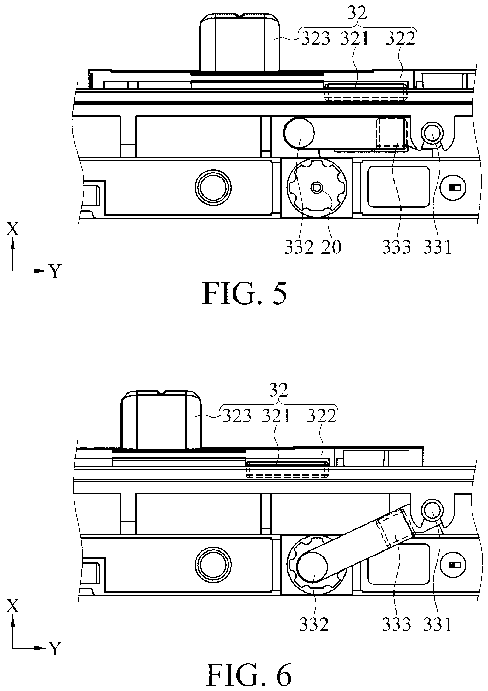

The sliding member 32 is slidably disposed in the groove 313 and movable between a first position (as shown in FIG. 5) and a second position (as shown in FIG. 6). The actuation manner will be described in detail below. The sliding member 32 includes a first magnet 321.

The anti-peeping piece 33 includes a first end 331 and a second end 332 opposite to each other and a second magnet 333 disposed at the first end 331. The first end 331 is pivotally connected to the second surface 312 of the mounting member 31 and corresponds to an end of the groove 313. In this embodiment, a pivoting member 314 protrudes from the second surface 312, and the first end 331 of the anti-peeping piece 33 is pivotally disposed on the pivoting member 314, so that the anti-peeping piece 33 can pivot with the first end 331 as an axis.

FIG. 5 is a schematic view of the camera anti-peeping structure in the first position according to the first embodiment of the present disclosure. FIG. 6 is a schematic view of the camera anti-peeping structure in the second position according to the first embodiment of the present disclosure. The second end 332 of the anti-peeping piece 33 is adapted to pivot based on the first end 331 as an axis to cover the camera 20 (as shown in FIG. 6) or expose the camera 20 (as shown in FIG. 5).

As can be seen from FIG. 5, when the sliding member 32 moves to the first position, the first magnet 321 attracts the second magnet 333, so that the second end 332 of the anti-peeping piece 33 pivots toward the sliding member 32 to expose the camera 20. In this embodiment, the second end 332 of the anti-peeping piece 33 is located above the camera 20. At this time, since the camera 20 is not covered or blocked, the camera 20 can be used normally. As shown in FIG. 6, under the operation of the user, when the sliding member 32 moves to the second position, the first magnet 321 repels the second magnet 333, so that the second end 332 of the anti-peeping piece 33 pivots away from the sliding member 32 to cover the camera 20. At this time, since the camera 20 is covered and blocked, outside images in front cannot be captured through the camera 20.

Thereby, by disposing the anti-peeping piece 33 actuated by rotation, the electronic device 100 with a camera anti-peeping structure according to this embodiment can effectively reduce the movement space required for the anti-peeping piece 33 to move to cover the camera 20. Since the anti-peeping piece 33 is disposed inside the main body 10 and not exposed on the front display surface, the display panel 12 can realize full-screen design, and the bezel can be effectively reduced, thereby realizing bezel-less design on the display surface.

As can be further seen from FIG. 2, in this embodiment, the sliding member 32 further includes a body 322 and an operating portion 323. The body 322 is slidably disposed in the groove 313. The operating portion 323 is disposed on a side (that is, an upper side in the X direction in FIG. 2) of the body 322 opposite to the first magnet 321 and extends to be exposed on the case 11. As can be seen from FIG. 1, the operating portion 323 is located on the upper side of the body 322, extends toward the upper side and is exposed on the surface on the upper side of the electronic device 100, so that the user can operate the operating portion 323 to actuate the anti-peeping structure 30. The first magnet 321 is located on a lower side of the body 322 and close to the end on a right side of the body 322. The user can drive the body 322 and the first magnet 321 to move between the first position and the second position through the operating portion 323.

For convenience of description, in this embodiment, a first direction is the X-axis direction, a second direction is the Y-axis direction perpendicular to the X-axis direction (first direction), and a third direction is the Z-axis direction perpendicular to the first direction and the second direction respectively. As can be seen from FIG. 1 to FIG. 4, the operating portion 323 of the sliding member 32 extends toward the outside of the case 11 along the first direction. The sliding member 32 moves between the first position and the second position along the second direction. In this embodiment, the operating portion 323 of the anti-peeping structure 30 is arranged on a side surface different from the display panel 12. As shown in FIG. 1, the display panel 12 is located on a surface of the case 11 facing in the third direction, and the operating portion 323 of the anti-peeping structure 30 is located on a surface of the case 11 facing in the first direction. Thereby, since the operating portion 323 and the display panel 12 are disposed on different side surfaces of the case 11 of the main body 10, the side of the display panel 12 can realize narrow-bezel design, so that the bezel is effectively reduced, thereby realizing bezel-less design on the display surface.

As can be seen from FIG. 2, FIG. 5 and FIG. 6, in this embodiment, the first end 331 of the anti-peeping piece 33 is set to pivot with the third direction as an axis. Thereby, the camera 20 can be covered or exposed within the smallest possible rotation range.

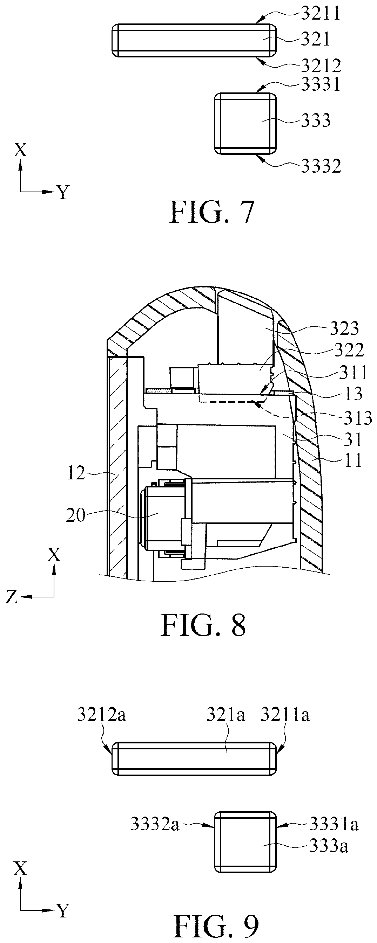

FIG. 7 is a schematic view showing distribution of magnetic poles of the first magnet and the second magnet according to the first embodiment of the present disclosure. As described above, the second end 332 of the anti-peeping piece 33 is adapted to pivot based on the first end 331 as the axis to cover or expose the camera 20 through the attraction or repelling between the first magnet 321 and the second magnet 333. In this implementation, the magnetic poles of the first magnet 321 and the second magnet 333 are respectively located on two sides of the first magnet 321 and the second magnet 333 along the first direction. As shown in FIG. 7, the magnetic poles of the first magnet 321 are respectively located on an upper side 3211 and a lower side 3212 of the first magnet 321 along the first direction. For example, the upper side 3211 of the first magnet 321 is an S pole, and the lower side 3212 of the first magnet 321 is an N pole.

Similarly, the magnetic poles of the second magnet 333 are respectively located on an upper side 3331 and a lower side 3332 of the second magnet 333 along the first direction. For example, the upper side 3331 of the second magnet 333 is an S pole, and the lower side 3332 of the second magnet 333 is an N pole. In this embodiment, the magnetic pole of the first magnet 321 on the side (that is, the lower side 3212) adjacent to the camera 20 and the magnetic pole of the second magnet 333 on the side (that is, the lower side 3332) adjacent to the camera 20 are set as the same magnetic pole, for example, N pole.

In this configuration, it can be verified by actual operations that when the sliding member 32 moves to the first position, the N pole on the lower side 3212 of the first magnet 321 attracts the S pole on the upper side 3331 of the second magnet 333, so that the anti-peeping piece 33 can be attracted upward, which makes the second end 332 pivot toward the sliding member 32 to expose the camera 20. While the sliding member 32 is being pushed to the second position, the magnetic field generated by the first magnet 321 repels the magnetic field generated by the second magnet 333, so that the anti-peeping piece 33 is pushed against by the magnetic force, which makes the second end 332 pivot away from the sliding member 32 to cover the camera 20.

In other implementations, the upper side 3211 of the first magnet 321 may be set as the N pole and the lower side 3212 as the S pole, and the upper side 3331 of the second magnet 333 may be set as the N pole and the lower side 3332 as the S pole. As long as the magnetic pole on the side (that is, the lower side 3212) of the first magnet 321 and the magnetic pole on the side (that is, the lower side 3332) of the second magnet 333 adjacent to the camera 20 are set as the same magnetic poles.

FIG. 8 is a schematic partial cross-sectional view of the camera anti-peeping structure taken along line A-A' in FIG. 1 according to the first embodiment of the present disclosure. As shown in FIG. 8, the main body 10 further includes a waterproof member 13 disposed between the case 11 and the first surface 311 of the mounting member 31. Thereby, the waterproof and dust-proof effects can be improved, thereby preventing liquid, moisture or dust from entering the case 11 through the operating portion 323. In this embodiment, the waterproof member 13 is a waterproof glue. The waterproof glue is coated around the groove 313. Since the groove 313 is a closed structure, after the waterproof glue is coated around the groove 313, the case 11 is tightly combined with the mounting member 31. Even if the liquid enters through the opening corresponding to the operating portion 323, it will only stay in the groove 313 and will not enter the case 11.

Next, referring to FIG. 9, FIG. 9 is a schematic view showing distribution of magnetic poles of a first magnet and a second magnet according to a second embodiment of the present disclosure. In this embodiment, the difference from the embodiment in FIG. 7 lies in the distribution manner of magnetic poles of a first magnet 321a and a second magnet 333a.

The magnetic poles of the first magnet 321a and the second magnet 333a are respectively located on two sides of the first magnet 321a and the second magnet 333a along the second direction. For example, a right side 3211a of the first magnet 321a is an N pole, and a left side 3212a of the first magnet 321a is an S pole. Similarly, the magnetic poles of the second magnet 333a are respectively located on a right side 3331a and a left side 3332a of the second magnet 333a along the second direction. For example, the right side 3331a of the second magnet 333a is an S pole, and the left side 3332a of the second magnet 333a is an N pole.

In this embodiment, the magnetic poles on the side (that is, the right side 3211a) of the first magnet 321a away from the operating portion 323 and on the side (that is, the right side 3331a) of the second magnet 333a facing the first end 331 of the anti-peeping piece 33 are set as opposite magnetic poles (one is the N pole and the other is the S pole). In this configuration, when the sliding member 32 moves to the first position, the N pole on the right side 3211a of the first magnet 321a attracts the S pole on the right side 3331a of the second magnet 333a, so that the anti-peeping piece 33 can be attracted to pivot upward, which makes the second end 332 pivot toward the sliding member 32 to expose the camera 20. While the sliding member 32 is being pushed to the second position, the N pole on the right side 3211a of the first magnet 321a gradually approaches the N pole on the left side 3332a of the second magnet 333a and then repels the second magnet 333a, so that the anti-peeping piece 33 is pushed against by the magnetic force, which makes the second end 332 move away from the sliding member 32 to cover the camera 20.

In other implementations, the right side 3211a of the first magnet 321a may be set as the S pole and the left side 3212a as the N pole, and the right side 3331a of the second magnet 333a may be set as the N pole and the left side 3332a as the S pole. As long as the magnetic poles on the side (that is, the right side 3211a) of the first magnet 321a away from the operating portion 323 and on the side (that is, the right side 3331a) of the second magnet 333a facing the first end 331 of the anti-peeping piece 33 are set as opposite magnetic poles.

Based on the above, by disposing the anti-peeping piece 33 actuated by rotation, the electronic device 100 with a camera anti-peeping structure according to the embodiments of the present disclosure can effectively reduce the movement space required for the anti-peeping piece 33 to move to cover the camera 20. Since the anti-peeping piece 33 is disposed inside the main body 10 and not exposed on the front display surface, the display panel 12 can realize full-screen design, and the bezel can be effectively reduced, thereby realizing bezel-less design on the display surface.

## Claims

1. An electronic device (100) with a camera anti-peeping structure, comprising:
a main body (10);
a camera (20), disposed in the main body (10); and
an anti-peeping structure (30), disposed at a side of the camera (20) and comprising:
a mounting member (31), disposed on the main body (10) and comprising a groove (313);
a sliding member (32), slidably disposed in the groove (313) and movable between a first position and a second position, wherein the sliding member (32) comprises a first magnet (321, 321a); and
an anti-peeping piece (33), having a first end (331) and a second end (332) opposite to each other and comprising a second magnet (333, 333a) disposed at the first end (331), wherein the first end (331) is pivotally connected to the mounting member (31), and the second end (332) is adapted to pivot based on the first end (331) as an axis to cover or expose the camera (20), wherein
when the sliding member (32) moves to the first position, the first magnet (321, 321a) attracts the second magnet (333, 333a) such that the second end (332) of the anti-peeping piece (33) pivots toward the sliding member (32) to expose the camera (20), and when the sliding member (32) moves to the second position, the first magnet (321, 321a) repels the second magnet (333, 333a) such that the second end (332) of the anti-peeping piece (33) pivots away from the sliding member (32) to cover the camera (20).

2. The electronic device (100) with a camera anti-peeping structure according to claim 1, wherein the sliding member (32) further comprises a body (322) and an operating portion (323), the body (322) is slidably disposed in the groove (313), the first magnet (321, 321a) is disposed on the body (322), and the operating portion (323) is disposed on a side of the body (322) opposite to the first magnet (321, 321a).

3. The electronic device (100) with a camera anti-peeping structure according to claim 2, wherein the operating portion (323) of the sliding member (32) extends toward an outside of the main body (10) along a first direction, the sliding member (32) moves between the first position and the second position along a second direction, and the first direction and the second direction are perpendicular to each other.

4. The electronic device (100) with a camera anti-peeping structure according to claim 3, wherein the first end (331) of the anti-peeping piece (33) pivots with a third direction perpendicular to the first direction and the second direction as an axis.

5. The electronic device (100) with a camera anti-peeping structure according to any one of claims 3 to 4, wherein magnetic poles of the first magnet (321) and the second magnet (333) are respectively located on two sides of the first magnet (321) and the second magnet (333) along the first direction.

6. The electronic device (10) with a camera anti-peeping structure according to claim 5, wherein a magnetic pole on the side of the first magnet (321) adj acent to the camera and a magnetic pole on a side of the second magnet (333) adjacent to the camera are the same.

7. The electronic device with a camera anti-peeping structure according to any one of claims 3 to 6, wherein magnetic poles of the first magnet (321a) and the second magnet (333a) are respectively located on two sides of the first magnet (321a) and the second magnet (333a) along the second direction.

8. The electronic device with a camera anti-peeping structure according to claim 7, wherein a magnetic pole on the side of the first magnet (321a) away from the operating portion (323) and a magnetic pole on the side of the second magnet (333a) facing the first end (331) of the anti-peeping piece (33) are opposite.

9. The electronic device with a camera anti-peeping structure according to any one of claims 1 to 8, wherein the main body (10) comprises a waterproof member (13) and a case (11), and the waterproof member (13) is disposed between the case (11) and the mounting member (31).

10. The electronic device with a camera anti-peeping structure according to claim 9, wherein the waterproof member (13) is a waterproof glue, and the waterproof glue is coated around the groove (313).

## Patentansprüche

1. Eine elektronische Vorrichtung (100) mit einer Kamera-Anti-Peeping-Struktur, aufweisend:
einen Hauptkörper (10);
eine Kamera (20), angeordnet in dem Hauptkörper (10); und
eine Anti-Peeping-Struktur (30), angeordnet an einer Seite der Kamera (20) und aufweisend:
eine Befestigungseinrichtung (31), angeordnet auf dem Hauptkörper (10) und aufweisend eine Aussparung (313);
eine Gleiteinrichtung (32), gleitend in der Aussparung (313) angeordnet und bewegbar zwischen einer ersten Position und einer zweiten Position, wobei die Gleiteinrichtung (32) einen ersten Magneten (321, 321a) aufweist; und
ein Anti-Peeping-Stück (33) mit einem ersten Ende (331) und einem zweiten Ende (332), die einander gegenüber liegen, und aufweisend einen zweiten Magneten (333, 333a), angeordnet an dem ersten Ende (331), wobei das erste Ende (331) schwenkbar mit der Befestigungseinrichtung (31) verbunden ist, und das zweite Ende (332) zum Schwenken eingerichtet ist, basierend auf dem ersten Ende (331) als einer Achse, um die Kamera (20) zu bedecken oder freizulegen, wobei
wenn die Gleiteinrichtung (32) sich zu der ersten Position hin bewegt, der erste Magnet (321, 321a) den zweiten Magneten (333, 333a) anzieht derart, dass das zweite Ende (332) des Anti-Peeping-Stücks (33) in Richtung der Gleiteinrichtung (32) schwenkt, so dass die Kamera (20) freigelegt wird, und, wenn die Gleiteinrichtung (32) sich zu der zweiten Position hin bewegt, der erste Magnet (321, 321a) den zweiten Magneten (333, 333a) abstößt derart, dass das zweite Ende (332) des Anti-Peeping-Stücks (33) von der Gleiteinrichtung (32) weg schwenkt, so dass die Kamera (20) bedeckt wird.

2. Die elektronische Vorrichtung (100) mit einer Kamera-Anti-Peeping-Struktur gemäß Anspruch 1,
wobei die Gleiteinrichtung (32) ferner einen Körper (322) und einen Betriebsabschnitt (332) aufweist, wobei der Körper (322) gleitend in der Aussparung (313) angeordnet ist, der erste Magnet (321, 321a) auf dem Körper (322) angeordnet ist, und der Betriebsabschnitt (323) auf einer Seite des Körpers (322) angeordnet ist, gegenüber dem ersten Magneten (321, 321a).

3. Die elektronische Vorrichtung (100) mit einer Kamera-Anti-Peeping-Struktur gemäß Anspruch 2,
wobei der Betriebsabschnitt (323) der Gleiteinrichtung (32) sich entlang einer ersten Richtung zu einer Außenseite des Hauptkörpers (10) hin erstreckt, die Gleiteinrichtung (32) sich entlang einer zweiten Richtung zwischen der ersten Position und der zweiten Position bewegt, und die erste Richtung und die zweite Richtung senkrecht zueinander sind.

4. Die elektronische Vorrichtung (100) mit einer Kamera-Anti-Peeping-Struktur gemäß Anspruch 3,
wobei das erste Ende (331) der Anti-Peeping-Struktur (30) mit einer dritten Richtung als Achse schwenkt, die senkrecht zu der ersten Richtung und der zweiten Richtung senkrecht ist.

5. Die elektronische Vorrichtung (100) mit einer Kamera-Anti-Peeping-Struktur gemäß einem der Ansprüche 3 bis 4,
wobei Magnetpole des ersten Magneten (321) und des zweiten Magneten (333) jeweils an zwei Seiten des ersten Magneten (321) und des zweiten Magneten (333) entlang der ersten Richtung angeordnet sind.

6. Die elektronische Vorrichtung (100) mit einer Kamera-Anti-Peeping-Struktur gemäß Anspruch 5,
wobei ein Magnetpol auf der Seite des ersten Magneten (321) neben der Kamera und ein Magnetpol auf einer Seite des zweiten Magneten (333) neben der Kamera gleich sind.

7. Die elektronische Vorrichtung (100) mit einer Kamera-Anti-Peeping-Struktur gemäß einem der Ansprüche 3 bis 6,
wobei Magnetpole des ersten Magneten (321) und des zweiten Magneten (333) jeweils an zwei Seiten des ersten Magneten (321) und des zweiten Magneten (333) entlang der zweiten Richtung angeordnet sind.

8. Die elektronische Vorrichtung (100) mit einer Kamera-Anti-Peeping-Struktur gemäß Anspruch 7,
wobei ein Magnetpol auf der Seite des ersten Magneten (321a), die von dem Betriebsabschnitt (323) abgewandt ist, und ein Magnetpol auf der Seite des zweiten Magneten (333a), die dem ersten Ende (331) des Anti-Peeping-Stücks (33) zugewandt ist, zueinander entgegengesetzt sind.

9. Die elektronische Vorrichtung (100) mit einer Kamera-Anti-Peeping-Struktur gemäß einem der Ansprüche 1 bis 8,
wobei der Hauptkörper (10) ein wasserdichtes Element (13) und ein Gehäuse (11) aufweist, und das wasserdichte Element (13) zwischen dem Gehäuse (11) und der Befestigungseinrichtung (31) angeordnet ist.

10. Die elektronische Vorrichtung (100) mit einer Kamera-Anti-Peeping-Struktur gemäß Anspruch 9,
wobei das wasserdichte Element (13) ein wasserdichte Kleber ist, und der wasserdichte Kleber um die Aussparung (313) herum aufgebracht ist.

## Revendications

1. Dispositif électronique (100) doté d'une structure anti-espion de la caméra, comprenant :
un corps principal (10) ;
une caméra (20), disposée dans le corps principal (10) ; et
une structure anti-espion (30), disposée sur un côté de la caméra (20) et comprenant :
un élément de montage (31), disposé sur le corps principal (10) et comprenant une rainure (313) ;
un élément coulissant (32), disposé de manière coulissante dans la rainure (313) et mobile entre une première position et une seconde position, dans lequel l'élément coulissant (32) comprend un premier aimant (321, 321a) ; et
une pièce anti-espion (33), dotée d'une première extrémité (331) et d'une seconde extrémité (332) opposées l'une à l'autre et comprenant un second aimant (333, 333a) disposé à la première extrémité (331), dans lequel la première extrémité (331) est reliée de manière pivotante à l'élément de montage (31), et la seconde extrémité (332) est adaptée pour pivoter sur la base de la première extrémité (331) en tant qu'axe pour couvrir ou exposer la caméra (20), dans lequel
lorsque l'élément coulissant (32) se déplace vers la première position, le premier aimant (321, 321a) attire le second aimant (333, 333a) de sorte que la seconde extrémité (332) de la pièce anti-espion (33) pivote vers l'élément coulissant (32) pour exposer la caméra (20), et lorsque l'élément coulissant (32) se déplace vers la seconde position, le premier aimant (321, 321a) repousse le second aimant (333, 333a) de sorte que la seconde extrémité (332) de la pièce anti-espion (33) pivote en s'éloignant de l'élément coulissant (32) pour couvrir la caméra (20).

2. Dispositif électronique (100) avec une structure anti-espion de caméra selon la revendication 1, dans lequel l'élément coulissant (32) comprend en outre un corps (322) et une partie opérationnelle (323), le corps (322) étant disposé de manière coulissante dans la rainure (313), le premier aimant (321, 321a) étant disposé sur le corps (322), et la partie opérationnelle (323) étant disposée sur un côté du corps (322) opposé au premier aimant (321, 321a).

3. Dispositif électronique (100) avec une structure anti-espion de caméra selon la revendication 2, dans lequel la partie opérationnelle (323) de l'élément coulissant (32) s'étend vers un extérieur du corps principal (10) le long d'une première direction, l'élément coulissant (32) se déplace entre la première position et la seconde position le long d'une deuxième direction, et la première direction et la deuxième direction sont perpendiculaires l'une par rapport à l'autre.

4. Dispositif électronique (100) avec structure anti-espion de caméra selon la revendication 3, dans lequel la première extrémité (331) de la pièce anti-espion (33) pivote avec une troisième direction perpendiculaire à la première direction et à la deuxième direction en tant qu'axe.

5. Dispositif électronique (100) avec une structure anti-espion de caméra selon l'une quelconque des revendications 3 à 4, dans lequel les pôles magnétiques du premier aimant (321) et du second aimant (333) sont respectivement situés sur deux côtés du premier aimant (321) et du second aimant (333) le long de la première direction.

6. Dispositif électronique (10) avec une structure anti-espion de caméra selon la revendication 5, dans lequel un pôle magnétique sur le côté du premier aimant (321) adjacent à la caméra et un pôle magnétique sur un côté du second aimant (333) adjacent à la caméra sont les mêmes.

7. Dispositif électronique avec une structure anti-espion de caméra selon l'une quelconque des revendications 3 à 6, dans lequel les pôles magnétiques du premier aimant (321a) et du second aimant (333a) sont respectivement situés sur deux côtés du premier aimant (321a) et du second aimant (333a) le long de la deuxième direction.

8. Dispositif électronique avec structure anti-espion de caméra selon la revendication 7, dans lequel un pôle magnétique sur le côté du premier aimant (321a) éloigné de la partie opérationnelle (323) et un pôle magnétique sur le côté du second aimant (333a) faisant face à la première extrémité (331) de la pièce anti-espion (33) sont opposés.

9. Dispositif électronique doté d'une structure anti-espion de caméra selon l'une quelconque des revendications 1 à 8, dans lequel le corps principal (10) comprend un élément étanche (13) et un boîtier (11), et l'élément étanche (13) est disposé entre le boîtier (11) et l'élément de montage (31).

10. Dispositif électronique avec une structure anti-espion de la caméra selon la revendication 9, dans lequel l'élément étanche (13) est une colle étanche, et la colle étanche est enduite autour de la rainure (313).
